(19) Europäisches Patentamt / European Patent Office / Office européen des brevets

(11) **EP 4 365 815 A1**

(12) **EUROPEAN PATENT APPLICATION**
published in accordance with Art. 153(4) EPC

(43) Date of publication:
**08.05.2024 Bulletin 2024/19**

(21) Application number: **22832726.8**

(22) Date of filing: **06.06.2022**

(51) International Patent Classification (IPC):
*G06Q 50/10* (2012.01)   *B60L 3/00* (2019.01)
*B60L 58/10* (2019.01)   *B60R 16/02* (2006.01)
*G01M 17/007* (2006.01)   *G06Q 10/00* (2023.01)
*G06Q 30/02* (2023.01)   *G06Q 40/08* (2012.01)
*G06Q 50/04* (2012.01)   *G16Y 10/40* (2020.01)
*G16Y 20/20* (2020.01)   *G16Y 40/20* (2020.01)

(52) Cooperative Patent Classification (CPC):
**B60L 3/00; B60L 58/10; B60R 16/02;
G01M 17/007; G06Q 10/00; G06Q 30/02;
G06Q 40/08; G06Q 50/04; G06Q 50/10;
G16Y 10/40; G16Y 20/20; G16Y 40/20**

(86) International application number:
**PCT/JP2022/022789**

(87) International publication number:
**WO 2023/276569 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.06.2021 JP 2021106713
30.03.2022 JP 2022057103**

(71) Applicant: **DENSO CORPORATION**
**Kariya-city, Aichi 448-8661 (JP)**

(72) Inventors:
• **NAKANO, Hiroki**
  **Kariya- city, Aichi 4488661 (JP)**
• **BABA, Kousuke**
  **Kariya- city, Aichi 4488661 (JP)**

(74) Representative: **TBK**
**Bavariaring 4-6**
**80336 München (DE)**

(54) **MOBILE OBJECT CONTROL SYSTEM AND PROGRAM**

(57) A control system of a mobile body is provided with a data acquiring unit (51) and a failure occurrence probability calculation unit (53). The data acquiring unit acquires data of a plurality of failure factors which may cause a failure on a mounted product mounted on a mobile body. The failure occurrence probability calculation unit calculates, based on data of the plurality of failure factors, a failure occurrence probability of components corresponding to the data of the plurality of failure factors.

FIG.3

EP 4 365 815 A1

**Description**

[Cross-Reference of Related Application]

The present application is based on and claims priority to Japanese Application Nos.2021-106713, filed June 28, 2021 and 2022-057103, filed March 30, 2022, the contents of both of which are incorporated herein by reference.

[Technical Field]

The present disclosure relates to a control system of a mobile body and a program thereof.

[Background Art]

Conventionally, a failure predicting system is known which is disclosed in patent literature 1 below. The system is provided for an object vehicle as an object to be predicted whether a failure will occur, and a failure predicting server capable of communicating with the object vehicle via a network. The failure predicting server utilizes data before failure occurs which is acquired in advance from the object vehicle and predicts whether a failure will occur on the object vehicle in the near future. Specifically, the failure predicting server is configured to calculate a correlation between vehicle data received from the object vehicle and vehicle data of a vehicle where a failure has occurred and predict that a failure will occur on the object vehicle in the case where a prescribed correlation is present therebetween. The prediction result is reported to a user of the object vehicle, thereby warning the user before the failure occurs.

[Citation List]

[Patent Literature]

[Summary of the Invention]

According to the failure predicting system disclosed in PTL1, it cannot be predicted whether a failure will occur in the object vehicle when no vehicle data of a failure vehicle is present. This may lower a versatility of the system. Note that such problems are not limited to vehicles but are common issues for any mobile bodies which preferably have a failure detecting function.
An object of the present disclosure is to provide a control system of a mobile body having high versatility while being capable of detecting a failure occurrence probability and a program thereof.
A control system of a mobile body according one aspect of the present disclosure is provided with a data acquiring unit and a failure occurrence probability calculation unit. The data acquiring unit acquires data of a plurality of failure factors which may cause a failure on a mounted product mounted on a mobile body. The failure occurrence probability calculation unit calculates, based on data of the plurality of failure factors, a failure occurrence probability of the mounted product corresponding to the data of the plurality of failure factors.
A program according to one aspect of the present disclosure causes a computer to function as: a data acquiring unit that acquires data of a plurality of failure factors which may cause a failure on a mounted product mounted on a mobile body; and a failure occurrence probability calculation unit (53, 1421) that calculates, based on data of the plurality of failure factors, a failure occurrence probability of the mounted product corresponding to the data of the plurality of failure factors.
With these configurations, since the failure occurrence probability of components can be calculated based on the failure factor data acquired by the data acquiring unit, vehicle data is unnecessary for calculating the failure occurrence probability of the components. Hence, a control system of a mobile body having high versatility while being capable of detecting a failure occurrence probability can be accomplished.

[Brief Description of the Drawings]

In the accompanying drawings:

Fig. 1 is schematically showing an overall configuration of a control system according to a first embodiment;
Fig.2 is a block diagram showing an overall configuration of a vehicle according to the first embodiment;
Fig.3 is a block diagram showing an overall configuration of a control system according to the first embodiment;
Fig.4 is a diagram showing an outline of an overall screen image displayed on a touch panel according to the first embodiment;

Fig.5 is a diagram showing a detailed screen image displayed on the touch panel according to the first embodiment;

Fig.6 is a diagram showing an outline of a notification screen image displayed on the touch panel according to the first embodiment;

Fig.7 is a flowchart showing a procedure of processes executed by a control apparatus of a vehicle according to the first embodiment;

Fig.8 is a flowchart showing a procedure of processes executed by a calculation unit of a server apparatus according to the first embodiment;

Fig.9 is a diagram showing an outline of an insurance-fee confirmation screen image displayed on the touch panel according to the first embodiment;

Fig. 10 is a flowchart showing a procedure of processes executed by a control apparatus of a vehicle according to a first modification example of the first embodiment;

Fig.11 is a timing diagram including timings (A) to (F) showing changes in a state of a confirmation button, a vehicle state, a frequency of use of on-board devices, a failure occurrence ratio of the on-vehicle devices, a discount rate of an insurance fee and an insurance fee after the discount;

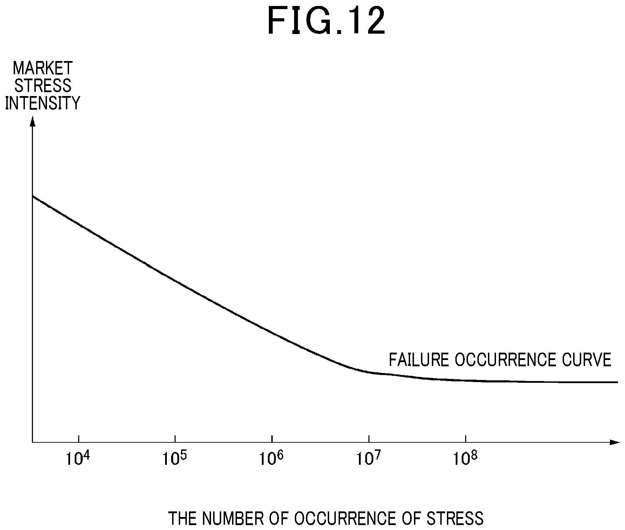

Fig.12 is a graph showing a relationship between the number of stresses and a market stress intensity used for a control system according to an eighth modification example of the first embodiment;

Fig.13 is a graph showing a relationship between an inverse number of a product temperature and a usage period used for the control system according to the eighth modification example of the first embodiment in the market;

Fig.14 is a graph schematically showing an overall configuration of a control system according to a second embodiment;

Fig.15 is a block diagram showing an overall configuration of a control system according to the second embodiment;

Fig.16 is a block diagram in which (A) shows a configuration of a motor and (B) shows a configuration of a battery according to a third embodiment;

Fig.17 is a table showing a relationship between an item, an acquisition method and a utilization method which are used for setting an insurance fee;

Fig.18 is a table showing a relationship between an item, an acquisition method and a utilization method which are used for setting an insurance fee; and

Fig.19 is a table showing a relationship between an item, an method and a utilization method which are used for setting an insurance fee.

[Description of Embodiments]

Hereinafter, with reference to the drawings, embodiments of a control system of a mobile body will be described. In order to facilitate understanding, the same reference symbols are applied to the same constituents in respective drawings as much as possible and redundant explanations will be omitted.

(First Embodiment)

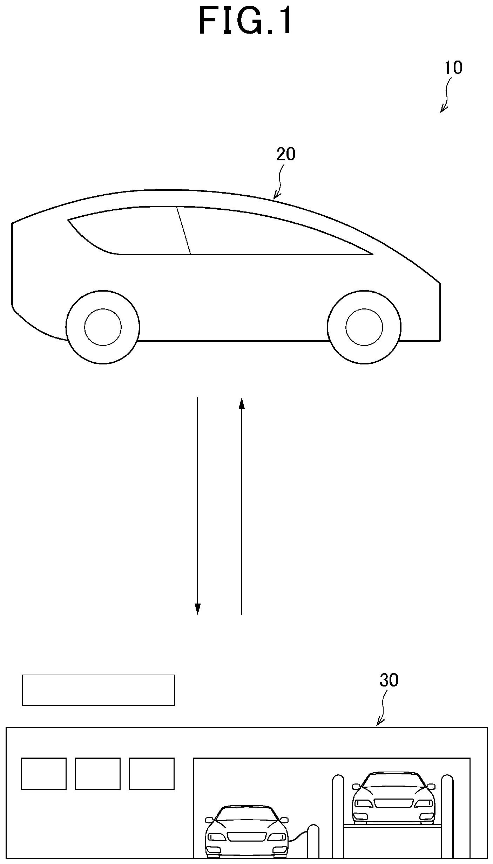

Firstly, a control system 10 according to the first embodiment shown in Fig. 1 will be described. As shown in Fig. 1, the control system 10 is provided with a vehicle 20 and a server 30. According to the first embodiment, the vehicle 20 corresponds to a mobile body. The vehicle 20 is so called hybrid vehicle having an engine and a motor as a motive force for driving. The vehicle 20 has a function of calculating a failure occurrence probability of various products mounted thereon such as an engine, a battery, tires and an air conditioner and a function of notifying the driver of the vehicle 20 of the calculated failure occurrence probability. The vehicle 20 is capable of communicating with the server 30. The server 30 acquires information about the vehicle 20 by communicating with the vehicle 20 and sets the insurance fee of the vehicle 20 based on the acquired information.

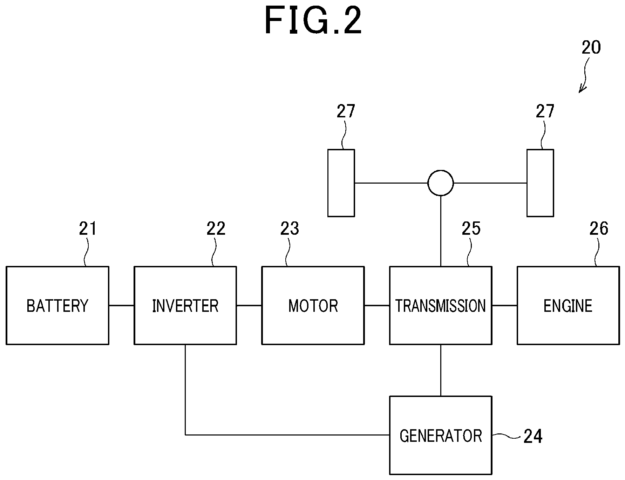

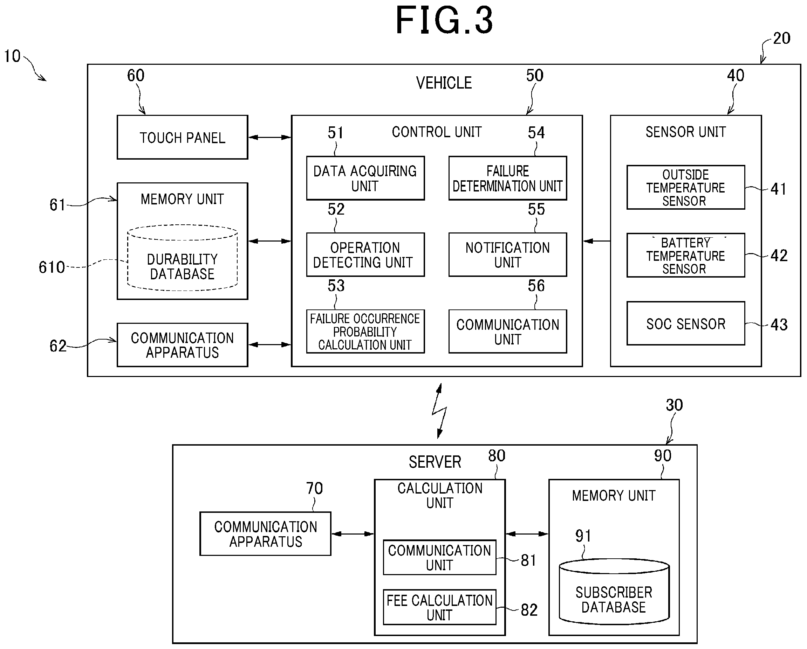

Next, with reference to Figs.2 and 3, detailed configurations of the vehicle 20 and the server 30 will be described. As shown in Fig.2, the vehicle 20 includes a battery 21, an inverter 22, a motor 23, a generator 24, a transmission 25 and an engine 26.

The battery 21 is a secondary battery capable of discharging or being charged. The inverter 22 converts the DC power supplied from the battery 21 to a three-phase AC power and supplies the converted three-phase AC power to the motor 23.

The motor 23 is driven with the three-phase AC power supplied from the inverter 22. The motor 23 transmits a motive force to the wheels 27 via the transmission 25, thereby applying a torque to the wheels 24 to accelerate the vehicle 20 for travelling. The generator 24 is regeneratively driven to generate power when the vehicle 20 is decelerating. With the regenerative driving of the generator 24, a braking force is applied to the wheels 27. The three-phase AC power generated with the regenerative driving of the generator 24 is converted to DC power by the inverter 22 which charges the battery 21.

The engine 26 transmits the motive power to the wheels 27 via the transmission 25 to apply torque to the wheels 27, thereby accelerating the vehicle 20 for travelling. As shown in Fig.3, the vehicle 20 is further provided with a sensor unit 40, a control unit 50, a touch panel 60, a memory unit 61 and a communication apparatus 62.

The sensor unit 40 is composed of various sensors mounted on the vehicle 20. For example, the sensor unit 40 includes an outside temperature sensor 41, a battery temperature sensor 42 and a SOC (state of charge) sensor 43. The outside temperature sensor 41 detects an outside temperature of the vehicle 20. The battery temperature sensor 42 detects a temperature of the battery 21. The SOC sensor 43 detects a SOC value of the battery 21. Note that the SOC value defines a fully discharged state of the battery 21 to be 0 [%] and the fully charged state of the battery 21 to be 100 [%] and indicates the charge state of the battery 21 within a range from 0 [%] to 100 [%]. The various sensors included in the sensor unit 40 outputs signals depending on the detected physical quantities to the control unit 50.

The touch panel 60 has a function of a display unit that displays various information with which the driver of the vehicle 20 is able to visually recognize and a function of an operation unit to which the driver is able to perform various input operations. As the touch panel 60, a touch panel included in a car-navigation apparatus can be used for example.

In the memory unit 61, various information of the vehicle 20, for example, information of an insurance fee of the vehicle 20 is stored. The communication apparatus 62 serves as an apparatus for performing a bi-directional wireless communication with the server 30 via the network.

The control unit 50 is mainly configured of a microcomputer including CPU, ROM, RAM and the like. The control unit 50 acquires various information of the vehicle 20 based on the output signals of the sensor unit 40 and executes various processes of the vehicle 20 based on the acquired information. For example, the control unit 50 calculates a failure occurrence probability of products mounted on the vehicle 20 based on the various information of the vehicle 20 detected by the sensor unit 40, and executes a process for displaying the calculated failure occurrence probability on the touch panel 60. In order to execute such processes, the control unit 50 includes, as a functional configuration accomplished by executing programs stored in advance in the ROM, a data acquiring unit 51, an operation detecting unit 52, a failure occurrence probability calculation unit 53, a failure determination unit 54, a notification unit 55 and a communication unit 56.

The data acquiring unit 51 acquires various information of the vehicle 20 based on the output signals from the sensor unit 40. For example, the data acquiring unit 51 acquires information of an outside temperature $T_{out}$ as an environmental temperature of the vehicle 20 based on the output signal of the outside temperature sensor 41. Also, the data acquiring unit 51 acquires information of a temperature $T_B$ of the battery 21 based on the output signal of the battery temperature sensor 42. Further, the data acquiring unit 51 acquires information of the SOC value of the battery 21 based on the output signal of the SOC sensor 43.

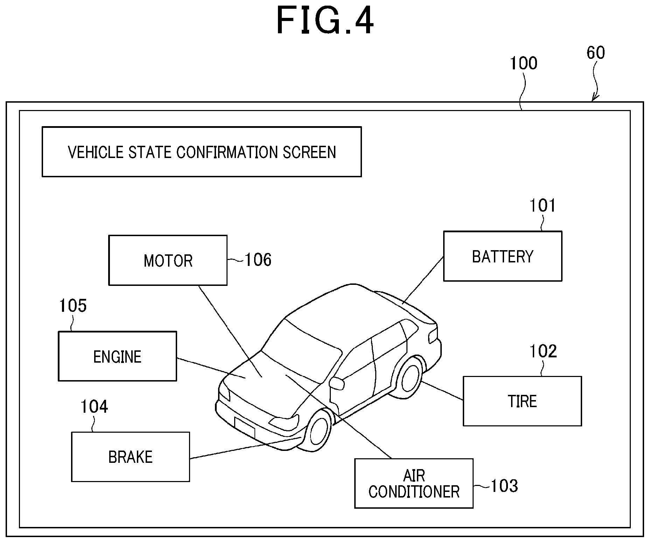

The operation detecting unit 52 detects a driver's touch operation applied to the touch panel 60. For example, the operation detecting unit 52 detects a touch operation when an icon 101 indicating 'battery' is touched during an outline screen image 100 as shown in Fig.4 being displayed on the touch panel 60.

The failure occurrence probability calculation unit 53 calculates a failure occurrence probability of products mounted on the vehicle 20 such as the battery 21, the engine 26, the tires and the air conditioner, based on the various information of the vehicle 20 acquired by the data acquiring unit 51. Hereinafter, products mounted on the vehicle 20 is referred to as on-vehicle product. According to the present embodiment, the on-vehicle products correspond to mounted product mounted on the vehicle 20.

Next, an example of a calculation method of the failure occurrence probability of the battery 21 will be described. The failure occurrence probability calculation unit 53 calculates a stand-alone life $L_a$ and cycle life $L_s$ of the battery 21 in accordance with a change in the outside temperature $T_{out}$ acquired from the data acquiring unit 51, a change in the temperature $T_B$ of the battery 21, a change in the SOC value of the battery 21 and a stand-alone time $T_a$, and calculates a failure occurrence probability of the battery 21 from these calculation values. Note that the stand-alone time $T_a$ corresponds to an accumulation value of time in a state where the battery 21 is not being used. According to the present embodiment, the outside temperature $T_{out}$ corresponds to data of an environmental factor which influences the failure occurrence probability of the battery 21.

The stand-alone life $L_a$ refers to a life time of the battery 21 which is decreased due to a deterioration even when it is not used. As elements used for calculating the stand-alone life $L_a$, three elements are present including a stand-alone time, a temperature of a stand-alone environment, and an open circuit voltage. According to the present embodiment, the stand-alone time, the temperature of the stand-alone environment, and the open circuit voltage correspond to failure factors.

Firstly, a lowering rate $K_{time}$ of the discharge capacity of the battery 21 due to an amount of the stand-alone time $T_a$ can be calculated with the following formula f1. In the formula f1, $K_s$ refers to deterioration rate constant which is a function of the outside temperature $T_{out}$ and the SOC value of the battery 21.

$$K_{time} = k_s \cdot T_a^{0.5} \ \ldots \ (f1)$$

Also, a lowering rate $K_{temp}$ of the discharge capacity of the battery 21 due to the temperature of the stand-alone environment can be calculated with the following formula f2 in accordance with Arrhenius' formula. In the formula f2, A is constant, R is a gas constant and $T_{out}$ is an outside temperature (absolute temperature). Moreover, $E_a$ is an activation energy at the nominal voltage ($\Delta OCV=0$).

$$K_{temp} = A \cdot exp \ (-E_a \ / \ (R \cdot T_{out}) \ ) \ \ldots \ (f2)$$

Further, a lowering rate $K_{ocv}$ of the discharge capacity of the battery 21 due to an open circuit voltage can be calculated with the following formula f3 assuming Arrhenius model in which the activation energy $E_a$ is modulated with a voltage. In the formula f3, A is a constant, R is a gas constant and $T_{out}$ is an outside temperature (absolute temperature). Also, $E_a$ is an activation energy at the nominal voltage ($\Delta OCV=0$).

Moreover, $\gamma$ is an electric field transfer coefficient of a side reaction, and F is Faraday constant.

$$K_{ocv} = A \cdot exp \ (-E_a - \gamma \cdot F \cdot \Delta OCV \ ) \ / \ R \cdot T) \ \ldots \ (f3)$$

The failure occurrence probability calculation unit 53 calculates respective lowering rates $K_{time}$, $K_{temp}$, $K_{ocv}$ based on the above-described formulas fl to f3 using the outside temperature $T_{out}$, the SOC value of the battery 21 and the stand-alone time $T_a$ of the battery 21, and calculates the stand-alone life $L_a$ of the battery 21 based on the formulas using the lower rates $K_{time}$, $K_{temp}$, $K_{ocv}$.

On the other hand, a cycle life $L_s$ is a life of the battery 21 which is lowered due to a deterioration in accordance with the use. As elements used for calculating the cycle life $L_s$, a charge-discharge pattern and a battery temperature. According to the present embodiment, the charge-discharge pattern and the battery temperature also correspond to failure factors. The lowering rate $K_p$ of the discharge capacity of the battery 21 due to the charge-discharge pattern depend on a charge condition and a discharge condition. The charge condition refers to a condition where the higher the SOC value of the battery 21, the shorter the cycle life $L_s$ is, and can be predicted with the Arrhenius' formula similar to the stand-alone life $L_a$. The discharge condition changes depending on a type of the battery 21 and an operating condition. For example, the discharge condition may be determined such that a relationship between a depth of discharge and the number of discharges, and the discharge time is calculated with a verification experiment, thereby preparing a prediction formula in advance. The lowering rate $K_p$ of the discharge capacity of the battery 21 due to charge-discharge pattern can be calculated using the prediction formula depending on the charge condition and the prediction formula depending on the discharge condition.

The lowering rate $K_b$ of the battery 21 due to the battery temperature can be calculated with an approximation of Arrhenius model similar to the stand-alone life $L_a$, using the following formula f4 with the temperature $T_B$ of the battery 21.

$$K_b = A \cdot exp \ (-E_a \ / \ (R \cdot T_B)) \ \ldots \ (f4)$$

The failure occurrence probability calculation unit 53 calculates, based on a predetermined prediction formula, the lowering rate $K_p$ of the discharge capacity of the battery 21 due to the charge-discharge pattern. The failure occurrence probability calculation unit 53 calculates, based on the above-described formula f4 from the temperature $T_B$ of the battery 21, the lowering rate $K_b$ of the discharge capacity of the battery 21 due to the battery temperature. Then, the failure occurrence probability calculation unit 53 calculates the cycle life $L_s$ using a calculation formula and the like from the respective lowering rates $K_p$, $K_b$.

The failure occurrence probability calculation unit 53 calculates a first failure probability Pf1 using a calculation formula and the like with the stand-alone life La of the battery 21 thus acquired, and calculates a second failure probability Pf2 using a calculation formula and the like with the cycle life Ls of the battery 21. Note that respective failure occurrence probabilities Pf1 and Pf2 are each expressed as a range from 0 [%] to 100 [%] such that failure is more likely to occur as the value becomes higher.

Since respective elements as the factors causing a deterioration of a plurality of batteries 21 are different between products, a deterioration evaluation is conducted assuming some operation patterns to be performed, and it is estimated, based on the result of the deterioration evaluation, which operation influences a deterioration and how much does the operation influence the deterioration. Thus, the failure prediction of the battery 21 can be performed.

A failure rate (lowering rate of the discharge capacity) can be calculated as long as an accumulate value of the deterioration factor element in the actual use is utilized.

The failure determination unit 54 compares a failure occurrence probability of each on-vehicle product calculated by the failure occurrence probability calculation unit 53 with a predetermined value, thereby determining whether a failure is likely to occur on an object on-vehicle product. For example, the failure determination unit 54 determines that a failure is likely to occur on the battery 21 in the case where either the failure occurrence probability Pf1 or the failure occurrence probability Pf2 of the battery 21 calculated by the failure occurrence probability calculation unit 53 is larger than or equal to a predetermined value $\alpha$.

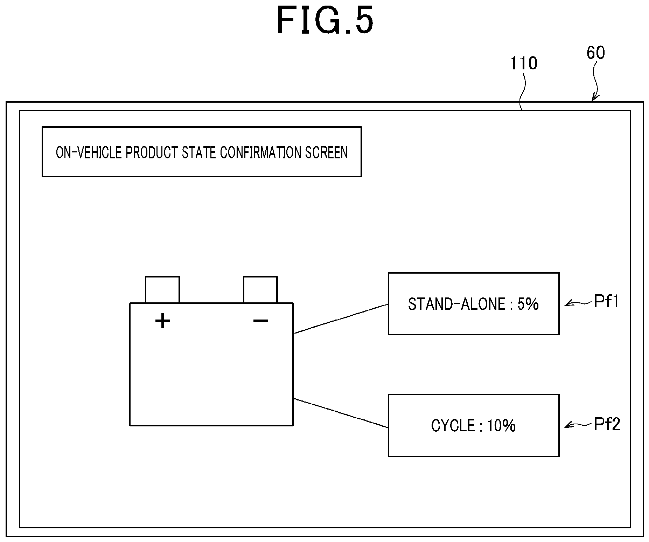

The notification unit 55 gives various notifications to the driver of the vehicle 20. For example, the notification unit 55 displays the outline screen image 100 shown in Fig.4 on the touch panel 60. According to the present embodiment, the outline screen image 100 corresponds to a first screen. For the outline screen image 100, icons 101 to 106 of respective on-vehicle products are displayed thereon capable of confirming the state. When the driver touches any one of the icons 101 to 106., the notification unit 55 displays a detailed screen image corresponding to the icon to which the driver touches, on the touch panel 60. For example, when the driver touches the icon 101 indicating 'battery', the operation detecting unit 52 detects the touch operation and notifies the notification unit 55 of the detected touch operation. At this moment, the notification unit 55 displays the detailed screen image 110 corresponding to the battery 21 shown in Fig.5 on the touch panel 60.

With the detailed screen image 110, detailed state of each on-vehicle product can be confirmed. According to the present embodiment, the detailed screen image 110 corresponds to second screen. For example, in the detailed screen image 110 of the battery 21 shown in Fig.5, respective failure occurrence probabilities Pf1 and Pf2 of the battery 21 are indicated with a percentage. Thus, a failure cause of each on-vehicle product and a failure occurrence probability with the failure cause at the moment is displayed.

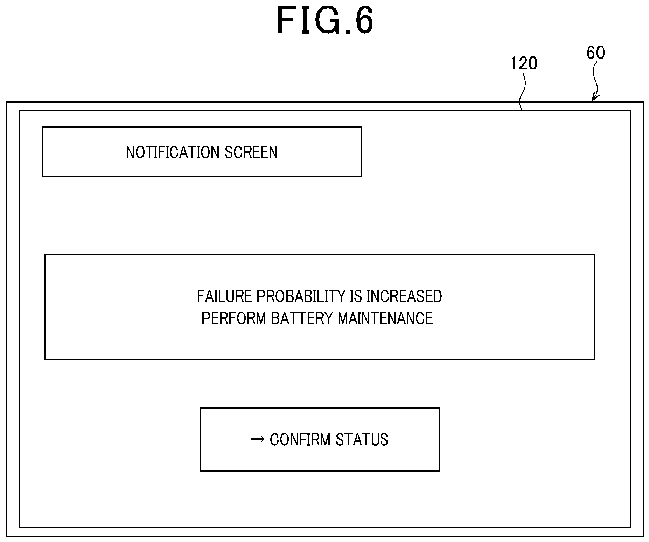

Further, the failure determination unit 54 notifies, when an on-vehicle product on which a failure is most likely to occur is detected, the notification unit of the information about this on-vehicle product. At this moment, the notification unit 55 notifies the driver of the vehicle 20 that an on-vehicle product is present where a failure is most likely to occur. For example, when a probability of a tire burst is increasing, the notification unit 55 displays a notification screen image 120 shown in Fig.6 on the touch panel 60. Then, an on-vehicle product having higher failure probability, a failure cause thereof and a message prompting a treatment method are displayed on the notification screen image 120. Note that an icon may be displayed on the notification screen image 120 indicating a transition to a detailed screen of an object on-vehicle product so as to confirm the detailed information of the object on-vehicle product.

The communication unit 56 of the control unit 50 shown in Fig.3 transmits various information of the vehicle 20 to the server 30 via the communication apparatus 62 to the server 30. For example, the communication unit 56 transmits information of the failure occurrence probability of respective on-vehicle products calculated by the failure occurrence probability calculation unit 53 to the server 30. Also, the communication unit 56 receives various information transmitted to the vehicle 20 from the server 30 via the communication apparatus 62.

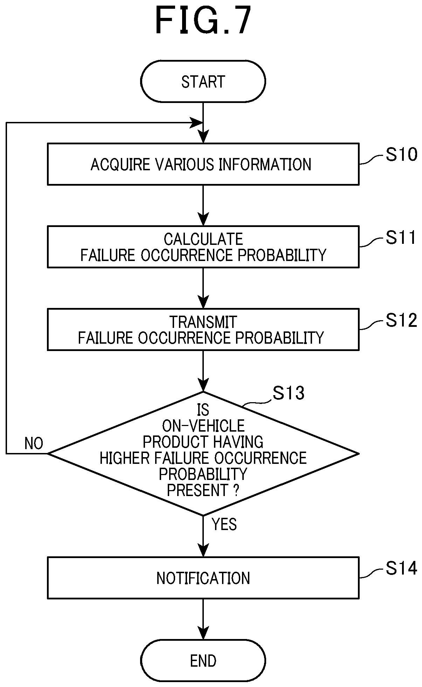

Next, with reference to Fig.7, specific procedures of processes for calculating the failure occurrence probability and displaying the calculated failure occurrence probability which are executed by the control unit 50 of the vehicle 20 will be described. The processes shown in Fig.7 is started when the operation detecting unit 52 detects an ON operation of the failure occurrence probability confirmation button which is displayed on the touch panel 60, for example.

As shown in Fig.7, firstly, a data acquiring unit 51 of the control unit 50 acquires, as a process of step S10, various information of the vehicle 20 based on the output signal of the sensor 40. As a process of step S11 subsequent to step S10, the failure occurrence probability calculation unit 53 of the control unit 50 calculates a failure occurrence probability of the respective on-vehicle products of the vehicle 20 based on the information acquired by the data acquiring unit 51. At this moment, the failure occurrence probability calculation unit 53 calculates the failure occurrence probability for each failure occurrence cause of each on-vehicle product.

As a process at step S12 subsequent to step S11, the communication unit 56 transmits the failure occurrence probability of each failure occurrence cause calculated by the failure occurrence calculation unit 53 to the server 30. As a process at step S13 subsequent to step S12, the failure determination unit 54 determines whether an on-vehicle product having high failure occurrence probability is present. Specifically, the failure determination unit 54 determines whether the failure occurrence probability of the object on-vehicle product is larger than or equal to a predetermined value. The failure determination unit 54 determines that the failure occurrence probability of the object on-vehicle product is higher when the failure occurrence probability of the object on-vehicle product is larger than or equal to the predetermined value $\alpha$. The failure determination unit 54 makes a negative determination at step S13 when determined that no on-vehicle product having high failure occurrence probability is present, and returns to the process at step S10. On the other hand, the failure determination unit 54 makes a positive determination at step S13 when determined that an on-vehicle product having high failure occurrence probability is present, and proceeds to a process at step S14.

The notification unit 55 displays, as a process at step S14, that an on-vehicle product having high failure occurrence probability is present on the touch panel 60, and notifies the driver of the fact that an on-vehicle product having high failure occurrence probability is present. Thus, the notification unit 55 corresponds to a failure information notification unit. As described above, according to the control system 10 of the present embodiment, the failure occurrence probabilities of respective on-vehicle products of the vehicle 20 are transmitted to the server 30. The server 30 calculates an insurance-fee or the like, based on the information transmitted from the vehicle 20.

Specifically, as shown in Fig.3, the server 30 is provided with a communication apparatus 70, a calculation unit 80 and a memory unit 90. The communication apparatus 70 performs a bi-directional wireless communication with the vehicle 20 via a network.

The memory unit 90 stores various information included in the server 30. The memory unit 90 stores a subscriber database 91 for example. The subscriber database 91 stores identification number of each user subscribed to a vehicle insurance, identification number of a vehicle corresponding to the identification number of each user, a failure occurrence probability of an on-vehicle product of each vehicle, and an insurance fee of each user which are associated with each other.

The calculation unit 80 is mainly configured of a microcomputer including CPU, ROM, RAM and the like. The calculation unit 80 calculates a discount rate of the insurance fee of the vehicle 20 based on the failure occurrence probability of each on-vehicle product transmitted from the vehicle 20 and corrects the insurance fee of the vehicle 20 based on the calculated discount rate. In order to execute such processes, the calculation unit 80 includes a communication unit 81 and a fee calculation unit 82 as functional configurations accomplished by executing programs stored in advance in the ROM.

The communication unit 81 receives various information transmitted from the vehicle 20. For example, the communication unit 81 receives information of the failure occurrence probability of each on-vehicle product transmitted from the vehicle 20 and causes the subscriber database 91 to store the information of the failure occurrence probability of the received on-vehicle product to be associated with the identification information of the vehicle 20. Further, the communication unit 81 transmits the insurance fee of the vehicle 20 stored in the subscriber database 91 to the vehicle 20 in accordance with a request from the vehicle 20.

The fee calculation unit 82 calculates the insurance fee of the vehicle 20 based on the failure occurrence probability of each on-vehicle product of the vehicle 20 received via the communication unit 81. Specifically, the vehicle 20 includes a basic insurance fee defined in advance, which depends on a condition when subscribing the insurance. The information of the basic insurance fee is stored in the subscriber database 91. The fee calculation unit 82 calculates the discount rate using a calculation formula or a map based on the failure occurrence probability of respective on-vehicle products of the vehicle 20 and corrects the basic insurance fee based on the calculated discount rate, thereby obtaining the insurance fee after the discount. The fee calculation unit 82 causes the subscriber database 91 to store the insurance fee after the discount.

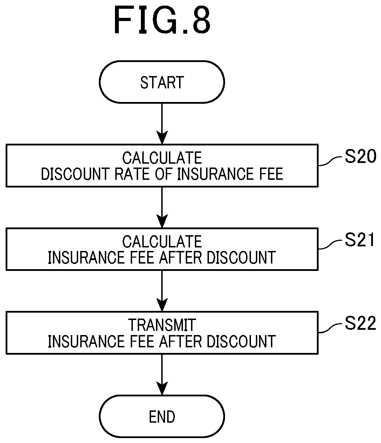

Next, with reference to Fig.8, specific procedure of the processes for calculating the insurance fee executed by the calculation unit 80 of the server 30 will be described. Note that the processes shown in Fig.8 is executed when the server 30 receives the information of the failure occurrence probability of each on-vehicle product transmitted from the vehicle 20.

As shown in Fig.8, firstly, the fee calculation unit 82 calculates, as a process of step S20, the discount rate of the insurance fee based on the failure occurrence probability of each on-vehicle product, and calculates, as a process of step S21, the insurance fee after the discount. Further, as a process of step S22 subsequent to step S21, the fee calculation unit 82 transmits the information of the insurance fee after the discount to the vehicle 20.

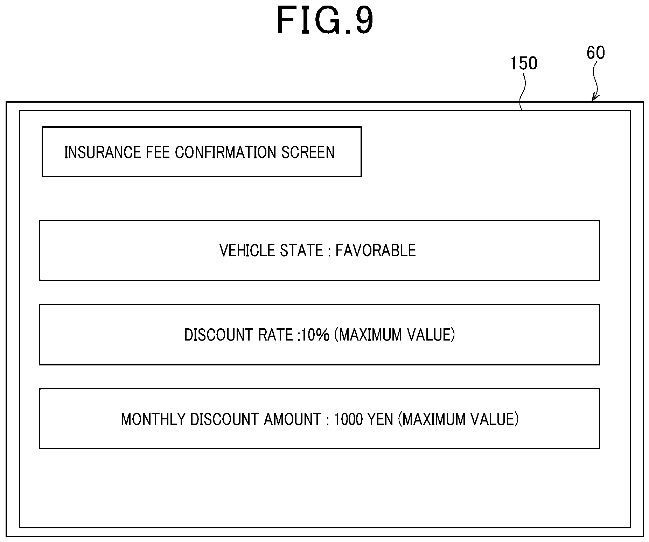

In the vehicle 20, when the communication unit 56 of the control apparatus 50 receives the information of the insurance fee after the discount transmitted from the server 30, the received information is caused to be stored in the memory unit 61. The notification unit 55 of the control apparatus 50 displays the information of the insurance fee after the discount on the touch panel 60 when the driver touches an insurance fee confirmation button displayed on the touch panel 60. At this moment, as shown in Fig.9, an insurance fee confirmation screen 150 including respective information of current vehicle state, a discount rate, an insurance fee after discount is displayed on the touch panel 60. For the vehicle state, the state is determined based on the failure occurrence probability of each on-vehicle product, and determined as favorable when the failure occurrence probability of each on-vehicle product is low. Thus, according to the present embodiment, the notification unit 55 corresponds to fee information notification unit.

According to the control system 100 of the vehicle 20 of the present embodiment described above, effects and advantages described in the following (1) to (8) can be obtained.

(1) The control apparatus 50 of the vehicle 20 is provided with a data acquiring unit 51 that acquires data of a plurality of failure factors which may cause a failure on the on-vehicle product and a failure occurrence probability calculation unit 53 that calculates, based on the data of the plurality of failure factors, a failure occurrence probability of on-vehicle product corresponding to the failure factors. For example, the data acquiring unit 51 acquires a failure factor related to stand-alone life $L_a$ such as a stand-alone time and a temperature of a stand-alone environment, and a failure factor related to a cycle life $L_s$ such as a charge-discharge pattern and a battery temperature. The failure occurrence probability calculation unit 53 calculates a first failure occurrence probability Pf1 based on the failure factor related to stand-alone life $L_a$ such as a stand-alone time and a temperature of a stand-alone environment and a second failure occurrence probability Pf2 based on s failure factor related to a cycle life $L_s$ such as a charge-discharge pattern and a battery temperature. With this configuration, since vehicle data of a vehicle where a failure has occurred is unnecessary for calculating the failure occurrence probability of on-vehicle product, high versatility can be accomplished.

(2) The data acquiring unit 51 acquires, as a failure factor of the battery 21, an environment factor which influences the failure occurrence probability of the battery 21 for example, that is, outside temperature $T_{out}$. With this configuration, not only the internal factor such as the temperature $T_B$ of the battery 21, the SOC value of the battery 21 and the stand-alone time $T_a$, but also the external factor such as the outside temperature $T_{out}$ are considered to calculate the failure occurrence probability, whereby the failure occurrence probability can be calculated with high accuracy.

(3) The fee calculation unit 82 of the server 30 calculates the discount rate of the insurance fee in accordance with the failure occurrence probability of the on-vehicle product. With this configuration, more appropriate insurance fee can be set. The fee calculation unit 82 may use a discount amount instead of using the discount rate.

(4) In the subscriber database 91 of the server 30, information of the failure occurrence probability of respective on-vehicle products of a plurality of vehicles 20 are accumulated therein. The fee calculation unit 82 calculates the discount rate of the insurance fee based on the failure occurrence probability of the on-vehicle products accumulated in the subscriber database 91. With this configuration, a more appropriate insurance fee can be set.

(5) The notification unit 55 of the vehicle 20 notifies the driver of the vehicle 20 of the discount rate of the insurance fee and the insurance fee in accordance with the discount rate after the discount. With this configuration, the driver of the vehicle 20 is able to readily recognize the discount rate of the insurance fee and the insurance fee after the discount.

(6) The failure determination unit 54 determines that the failure occurrence rate of the on-vehicle product is higher when the failure occurrence probability of the on-vehicle product is larger than or equal to a predetermined value $\alpha$. With this configuration, it is readily determined whether the failure occurrence probability is higher.

(7) The notification unit 55 of the vehicle 20 gives a notification in accordance with the failure occurrence probability of the on-vehicle product as shown in Fig.5 to the driver. With this configuration, the driver is able to readily confirm the failure occurrence probability of the on-vehicle product.

(8) As shown in Fig.5, the failure occurrence probability is displayed on the detailed screen image 110 for each of the plurality of failure factors of the on-vehicle product. With this configuration, the driver is able to readily confirm the failure occurrence probability of the on-vehicle product.

(First modification example)

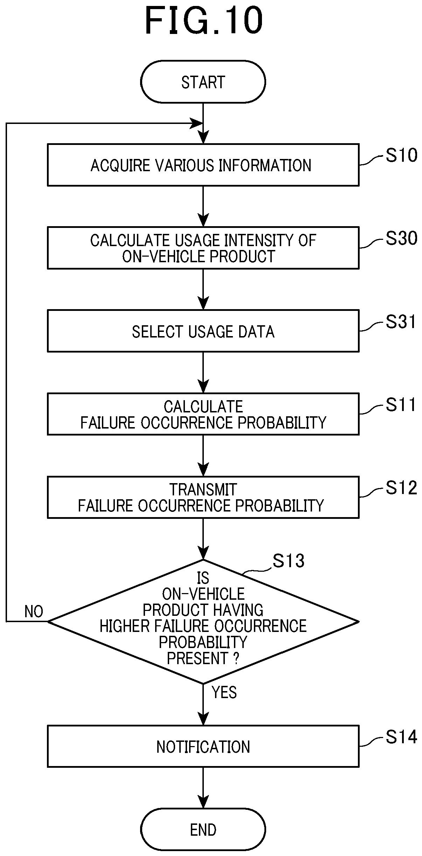

Next, a first modification example of the control system 100 of the first embodiment will be described. In the process at step S11 shown in Fig.7, the failure occurrence probability may be calculated based on a intensity of use and usage data of the on-vehicle product. Specifically, as shown in Fig. 10, the failure occurrence probability calculation unit 53 calculates, as a process at step S30 subsequent to step S10, the intensity of use of each on-vehicle product. Specifically, the process calculates the intensity of use of each on-vehicle product based on various information of the vehicle 20.

As a process at step S31 subsequent to step S20, the failure occurrence probability calculation unit 53 selects usage data. In more detail, the failure occurrence probability calculation unit 53 selects durability data used for calculating the failure occurrence probability of each on-vehicle product from a durability database 610 of on-vehicle products stored in the memory unit 61 of the vehicle 20 indicated by a dotted line shown in Fig.3. Then, the failure occurrence probability calculation unit 53 calculates the failure occurrence probability for each failure occurrence factor of each on-vehicle product using the durability and the intensity of use of each on-vehicle product.

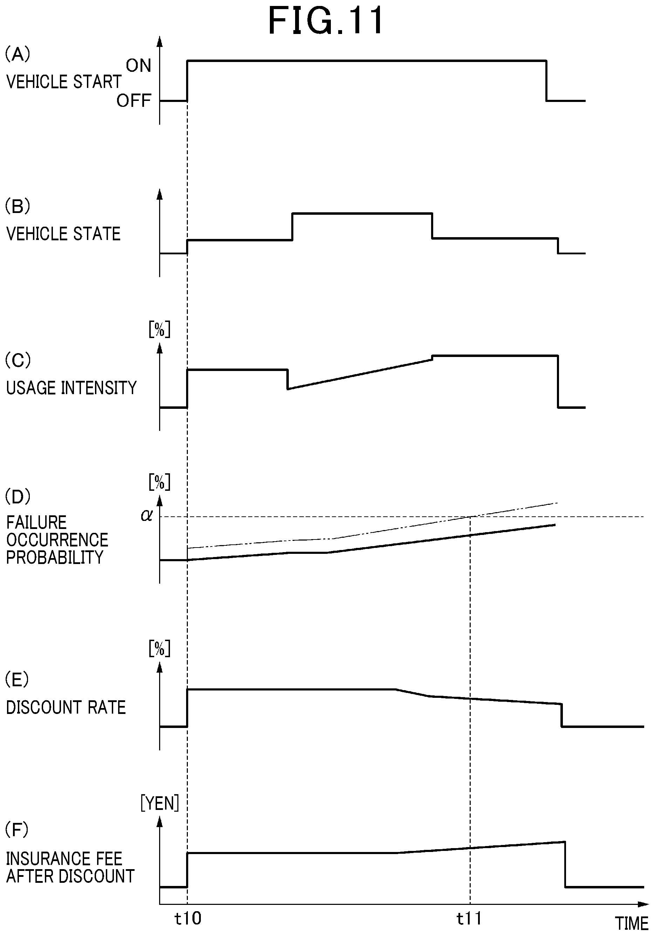

Fig.11 illustrates an operation example of the control system 10 of the present modification example. As shown in timing (A) of Fig.11, when the vehicle is activated at time t10, the system starts to calculate the intensity of use of the on-vehicle product. The intensity of use of the on-vehicle product increases or decreases depending on the state of the vehicle 20 shown in the timing (B) of Fig.11. At this time, the failure occurrence probability of the on-vehicle product changes as shown in the timing (D) of Fig.11. As indicated by a two-dot chain line in the timing (D) of Fig.11, assuming that the failure occurrence probability reaches a predetermined value $\alpha$ or larger at time t11, the notification screen image 120 shown in Fig.6 is displayed on the touch panel 60 at time t11. The discount rate of the insurance fee and the insurance fee after the discount change as shown in the timing (E) and (F) of Fig.11.

(Second modification example)

Next, a second modification example of the control system 10 according to the first embodiment will be described. For the on-vehicle product from which the failure occurrence probability is calculated, tires of the vehicle 20 can be adopted for example. The failure occurrence probability calculation unit 53 calculates an occurrence probability of a flat tire or a tire burst based on an accelerator operation, a braking operation, a steering operation, a sensor value of the tire pressure, a travelling distance and the like. The failure occurrence probability calculation unit 53 determines, when detecting that the air pressure of the tires is lowered, that it is likely to cause a tire burst, a flat tire, a degradation of fuel efficiency, an early treadwear, an uneven wear or deterioration of ride comfort. Further, the failure occurrence probability calculation unit 53 determines that the tires are likely to burst when detecting a travelling which may cause a large heat generation on tires based on a travel related in-vehicle information such as a continuous high-speed travelling, repeated rapid start and stop, a rapid direction change and the like.

(Third modification example)

Next, a third modification example of the control system 10 of the first embodiment will be described. As the on-vehicle product with which the failure occurrence probability is calculated, for example, an air conditioner of the vehicle 20 may be utilized. The failure occurrence probability calculation unit 53 calculates the failure occurrence probability of the air conditioner based on a usage time, an outside temperature, a setting temperature, a temperature of the cooling water, a rotation speed of a blower-fan motor. When a state where a large difference between the outside temperature and the setting temperature continues for a longer period, since the blower-fan motor continues to rotate at high rotational speed for a longer period, the intensity of use of the air conditioner becomes large.

(Fourth modification example)

Next, a fourth modification example of the control system 10 of the first embodiment will be described. As an on-vehicle product with which the failure occurrence probability is calculated, for example, a battery such as a lead-acid battery used for supplying power to various auxiliary equipment of the vehicle 20 can be utilized. The failure occurrence probability calculation unit 53 calculates occurrence probabilities of a battery deterioration, a battery exhaustion, a connection failure of a terminal section and lowered battery liquid level in accordance with a battery temperature, a battery voltage, a battery current, a usage time, an outside temperature and the like. Since continuous turn ON of the light during the vehicle stop or excessive use of an auxiliary equipment during the travelling may cause a battery exhaustion or a battery deterioration, the intensity of use of the battery becomes larger. Further, a intensity of use may be calculated based on the usage of the battery considering whole vehicle system such as an amount of power used for the motor generator system, an amount of power consumption of the air conditioner and an audio equipment during the travelling to calculate a battery deterioration or the like.

(Fifth modification example)

Next, a fifth modification example of the control system 10 of the first embodiment will be described. As the on-vehicle product with which the failure occurrence probability is calculated, an alternator of the vehicle 20 may be utilized for example. The failure occurrence probability calculation unit 53 calculates occurrence probabilities of a fan-belt failure of the alternator, a failure of a brush, a failure of a regulator, a failure of a diode, a coil breakage and the like.

(Sixth modification example)

Next, a sixth modification example of the control system 10 of the first embodiment will be described. As the on-vehicle product with which the failure occurrence probability is calculated, a starter of the vehicle 20 may be utilized for example. The failure occurrence probability calculation unit 53 calculates failure occurrence probability of the starter, that is, a relay failure, a connection failure of a terminal section, an engagement failure and a failure of an ignition switch.

(Seventh modification example)

Next, a seventh modification example of the control system 10 of the first embodiment will be described. As the on-vehicle product with which the failure occurrence probability is calculated, a motor of the vehicle 20 may be utilized. The failure occurrence probability calculation unit 53 calculates a degree of wear of the rotation section and a deterioration of a resin part based on a rotational speed of the motor, a command torque, an internal temperature and the like.

(Eighth modification example)

Next, an eighth modification example of the control system 10 of the first embodiment will be described. For the calculation of the failure occurrence probability by the failure occurrence probability calculation unit 53, required signals and calculation formulas are different between respective components. However, common theoretical part thereof is as follows.

When calculating the failure occurrence probability, the following two view points are considered.

    (a) occurrence of failure based on an intensity of a stress and the number of occurrences of stresses.
    (b) occurrence of failure based on temperature during the operation and usage time.

Here, for the item (a), the calculation can be made for a fatigue failure of respective components similar to a concept of S-N diagram used for analyzing failures of metal and concrete. With the stress strength applied to respective components and the number of occurrences of stress, a failure occurrence curve can be predicted in a design stage and a manufacturing stage. With the stress intensity applied in the actual market and the number of occurrences of the stress, the failure occurrence probability can be calculated.

Also, the above-mentioned (b) can be estimated in accordance with an amount of energy when material modification or the like is applied to a product and a time of the application. Assuming that a time required for a reaction advancing to a prescribed level is defined as L, the following formula f5 can be derived from Arrhenius' chemical reaction formula. In the formula f5, 'ln' refers to natural logarithm, 'A' refers to a constant, $E_a$ refers to activation energy, 'R' refers to gas constant and 'T' refers to absolute temperature (K).

$$Ln\ (L) = A + Ea\ /\ R \cdot T \ \dots \ (f5)$$

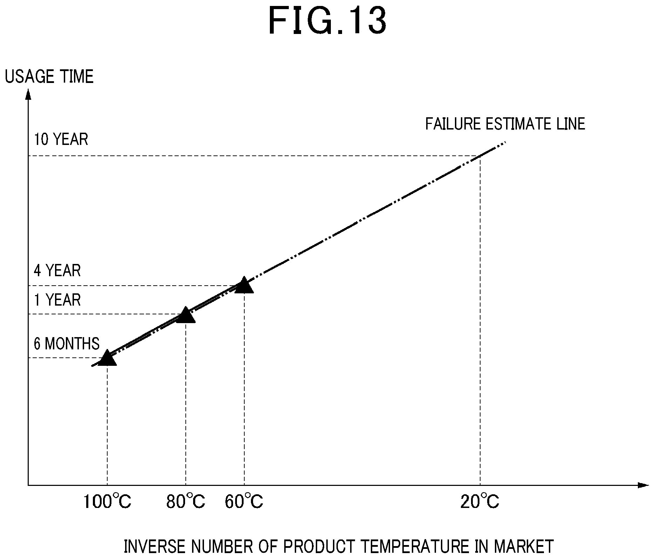

The formula 5 can be expressed like Fig.13 since it is estimated with the product temperature and the usage time used in the market according to the on-vehicle product. Note that the failure estimated line in the Arrhenius plot can be recognized with values acquired from an evaluation test in the design state and the manufacturing stage, and the failure occurrence probability can be calculated by comparing with the intensity of use and the usage time in the actual market.

(Second embodiment)

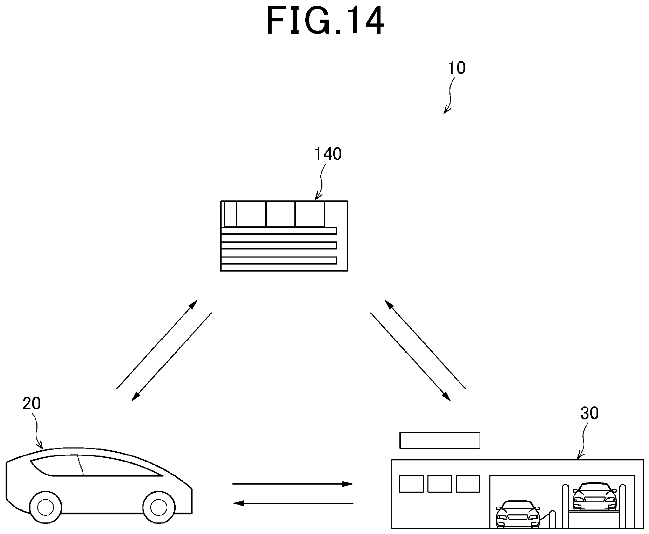

Next, second embodiment of the control system 19 will be described. Hereinafter, configurations different from those in the control system 10 according to the first embodiment will mainly be described. As shown in Fig. 14, the control system 10 according to the present embodiment differs from the control system 10 of the first embodiment in that a server 140 is provided other than that of the vehicle 20 and the server 30. Hereinafter, for the sake of convenience, the server 30 is referred to as first server 30, and the server 140 is referred to as second server 140.

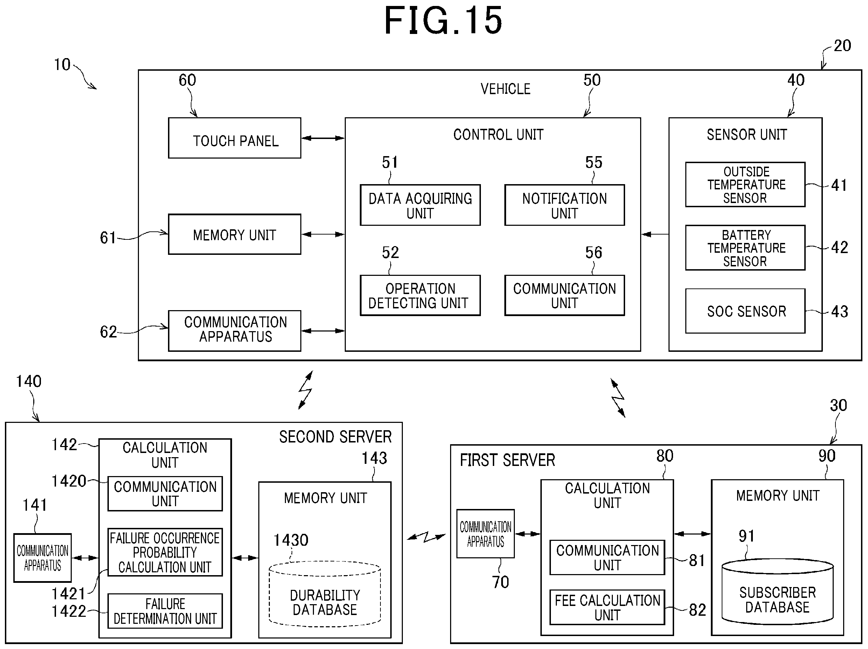

As shown in Fig. 15, the second server 140 is provided with a communication apparatus 141, a calculation apparatus 142 and a memory unit 143. The communication apparatus 141 performs bi-directional wireless communication with the vehicle 20 via a network.

The memory unit 143 stores information transmitted from the vehicle 20, for example, information acquired from the data acquiring unit 51 of the vehicle 20. Note that the memory unit 143 may store a durability database 1430 of on-vehicle products shown in Fig.3. The calculation unit 142 is mainly configured of a microcomputer including CPU, ROM, RAM and the like. The calculation unit 142 calculates the failure occurrence probability based on the information of the on-vehicle product transmitted from the vehicle 20. In order to execute such processes, the calculation unit 142 includes a communication unit 1420, a failure occurrence probability calculation unit 1421, a failure determination unit 1422 as functional configurations accomplished by executing programs stored in advance in the ROM.

The communication unit 1420 receives various information transmitted from the vehicle 20 and the first server 30 from the communication apparatus 141. For example, the communication unit 56 of the vehicle 20 transmits the various information of the vehicle acquired by the data acquiring unit 51 to the second server 140. The communication unit 1420 of the second server 140 receives the various information transmitted from the vehicle 20 and causes the memory unit 143 to store the received various information.

Also, the communication unit 1420 transmits various information to the first server 30 from the second server 140 via the communication apparatus 141. For example, the communication unit 1420 information of failure occurrence probability of each on-vehicle product calculated by the failure occurrence probability calculation unit 1421 to the vehicle 20 and the first server 30.

The failure occurrence probability calculation unit 1421 calculates, based on the various information of the vehicle 20 stored in the memory unit 143, the failure occurrence probability of each on-vehicle product of the vehicle 20. The failure determination unit 1422 determines whether a failure is most likely to occur on each on-vehicle product based on the failure occurrence probability of each on-vehicle product calculated by the failure occurrence probability calculation unit 1421 and transmits the determination result to the vehicle 20. In the vehicle 20, when the determination result showing higher failure occurrence probability is transmitted from the second server 140 to the vehicle 20, the notification unit 55 displays the determination result on the touch panel 55. Since the calculation method of the failure occurrence probability and a determination method of a failure are the same as those described in the first embodiment, detailed description thereof is omitted.

Thus, according to the present embodiment, even in the case where the failure occurrence probability calculation unit 1421 and the failure determination unit 1422 are mounted on another second server 140 other than that of the vehicle 20, effects and advantages the same as or similar to those in the first embodiment can be obtained. According to the present embodiment, the second server 140 corresponds to separate equipment.

(Third embodiment)

Next, a third embodiment of the control system 10 will be described. Hereinafter, configurations different from those in the control system 10 according to the first embodiment will mainly be described. The on-vehicle product is configured of a plurality of components. The control system 10 according to the present embodiment calculates respective failure occurrence probabilities of a plurality of components and calculates, based on the calculated failure occurrence probabilities, the failure occurrence probability of the on-vehicle product.

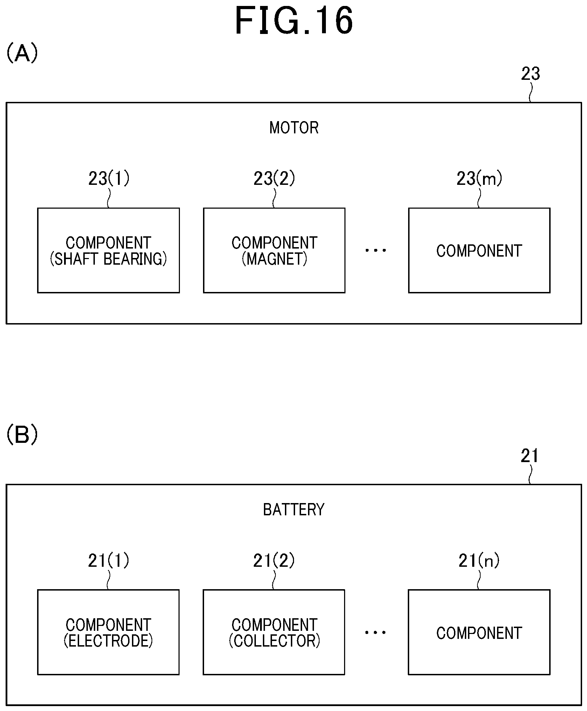

For example, as shown in diagram (A) in Fig.16, the motor 23 is configured of a plurality of components 23 (1), 23 (2), ···, 23 (m) such as a shaft bearing and magnets. Note that 'm' refers to an integer larger than or equal to 2. The failure occurrence probability calculation unit 53 calculates a intensity of use of the shaft bearing of the motor 23 based on a change in the rotational speed of the motor 23, and a rotational duration and the like, and calculates a stress of the shaft bearing based on the calculated intensity of use. Then, the failure occurrence probability calculation unit 53 calculates the failure occurrence probability of the shaft bearing based on the calculated stress.

Further, the failure occurrence probability calculation unit 53 calculates a stress (thermal fatigue) of magnets of the motor 23 based on the outside temperature, the temperature of a portion where the motor 23 is mounted, and a heat quantity of the motor 23. Then, the failure occurrence probability calculation unit 53 calculates a failure occurrence probability of the magnets based on the calculated stress. The failure occurrence probability calculation unit 53 thus calculates respective failure occurrence probabilities Pf 10 (1), Pf 10(2), ···, Pf 10 (m) of a plurality of components 23 (1), 23 (2), ···, 23 (m) of the motor 23. The failure occurrence probability calculation unit 53 calculates the failure occurrence probability of the motor 23 in accordance with the calculated failure occurrence probabilities Pf 10 (1), Pf 10(2), ···, Pf 10 (m). For example, the failure occurrence probability calculation unit 53 uses the largest one among the failure occurrence probabilities Pf 10 (1), Pf 10(2), ···, Pf 10 (m) to be a failure occurrence probability Pf10.

On the other hand, as shown in (B) in Fig. 16, the battery 21 is composed of a plurality of components 21(1), 21(2), ···, 21 (n) such as electrodes, collectors and the like. Note that 'n' refers to an integer larger than or equal to 2. The failure occurrence probability calculation unit 53 calculates a stress of the electrodes based on current flowing through electrodes, voltage applied to the electrodes and usage time of the battery 21, and calculates a failure occurrence probability of the electrodes in accordance with the calculated stress.

Also, the failure occurrence probability calculation unit 53 calculates an amount of change in a gas pressure inside the battery 21 based on characteristics change of an impedance response of the battery 21, and calculates a degree of deterioration and a breakdown probability of the collectors using a combination of the calculated amount of change in the gas pressure and the number of charges-discharges. Then, the failure occurrence probability calculation unit 53 calculates the failure occurrence probability of the collectors based on the calculated degree of deterioration and the breakdown probability of the collector.

The failure occurrence probability calculation unit 53 thus calculates respective failure occurrence probabilities Pf 20 (1), Pf 20(2), ···, Pf 20 (n) of a plurality of components 21 (1), 21 (2), ···, 21 (n) of the battery 21, and then calculates the failure occurrence probability of the battery 21 in accordance with the calculated failure occurrence probabilities Pf 20 (1), Pf 20(2), ···, Pf 20 (n). For example, the failure occurrence probability calculation unit 53 uses the largest one among the failure occurrence probabilities Pf 20 (1), Pf 20(2), ···, Pf 20 (n) to be the failure occurrence probability Pf 20 of the battery 21.

Thus, according to the control system 10 of the vehicle 20 of the present embodiment, the failure occurrence probability calculation unit 53 calculates respective failure occurrence probabilities of a plurality of components that constitute the on-vehicle product, and calculates the failure occurrence probabilities of the mounted product based on the respective failure occurrence probabilities of the plurality of components. Specifically, the failure occurrence probability calculation unit 53 uses a failure occurrence probability of a component having the largest failure occurrence probability among respective failure occurrence probabilities of a plurality of components, to be a failure occurrence probability of the mounted product. With this configuration, the failure occurrence probability of the mounted product can be calculated more accurately.

Note that the failure occurrence probability calculation unit 53 may calculate a failure occurrence probability of an on-vehicle product based on the failure occurrence probabilities of a plurality of components and respective availabilities of the plurality of components. In the case where prescribed components are difficult to obtain for example, that is, days are required to obtain prescribed components, and failures of the prescribed components are required to be recognized as early as possible. Hence, the failure occurrence probability calculation unit 53 may correct the failure occurrence probability such that the more difficult to obtain the components, the larger the failure occurrence probability. For example, the failure occurrence probability calculation unit 53 calculates a weighting coefficient in accordance with the availability based on a map or the like. With this map, the coefficient is set such that the more difficult it is to obtain the components, the larger the weighting coefficient value is set. The failure occurrence probability calculation unit 53 calculates the failure occurrence probability of the components and then multiplies the failure occurrence probability by the weighting coefficient, whereby the final failure occurrence probability is calculated. With this configuration, the failure occurrence probability can be calculated considering the availability of the components.

(Other Embodiment)

Note that the above-described embodiments may be embodied in the following manner. The fee calculation unit 82 of the server 30 may change the discount rate or an amount of discount based on at least one of the type of the on-vehicle product and the failure factor corresponding to the on-vehicle product.

The notification unit 55 may notify, when the driver operates the vehicle 20 in a way that increases the failure occurrence probability of the on-vehicle product, the driver of that operation by displaying on the touch panel 60. According to this configuration, the driver can be warned not to perform the operation in a way that increases the failure occurrence probability.

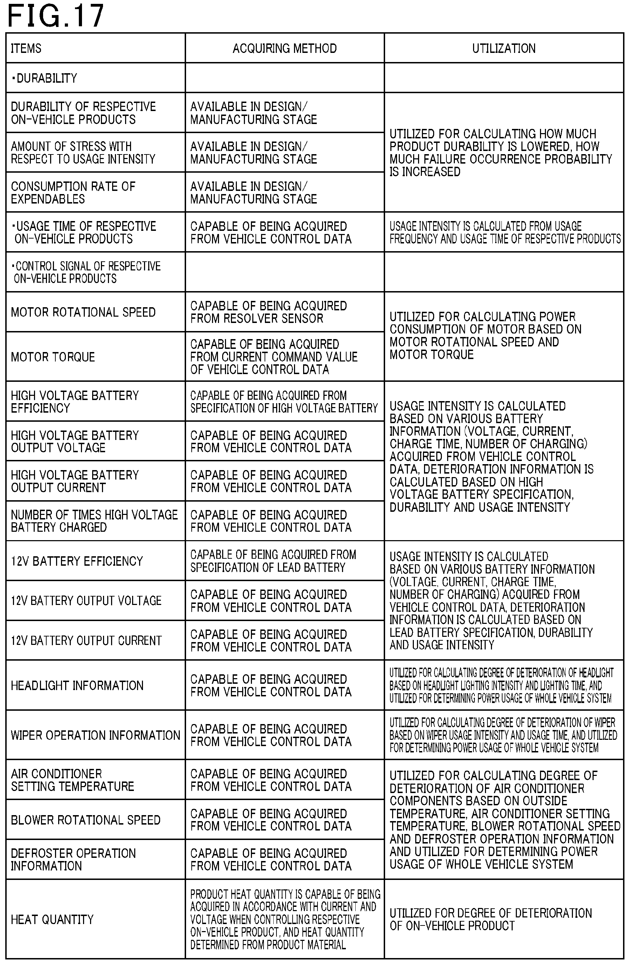

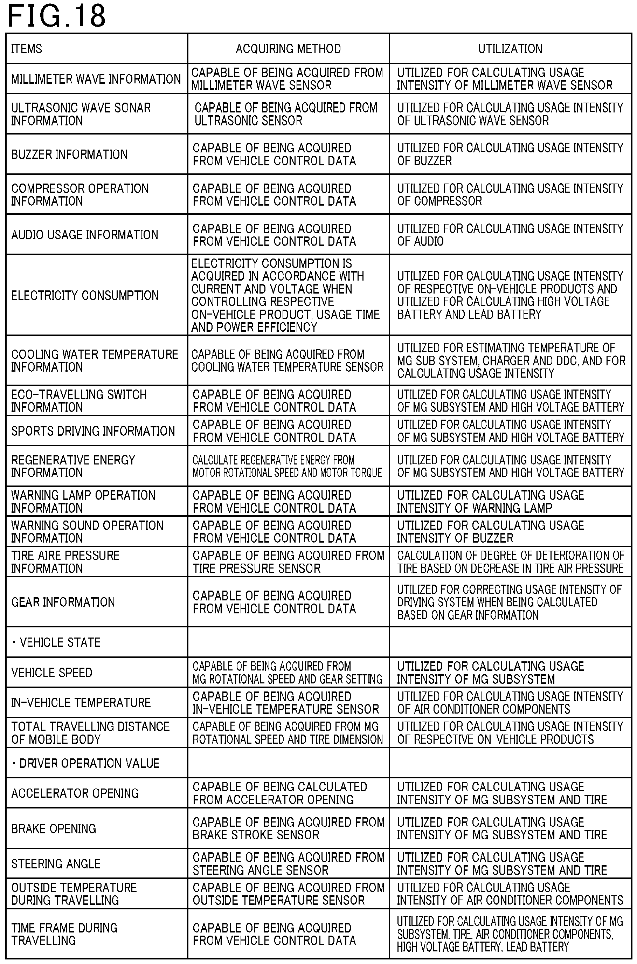

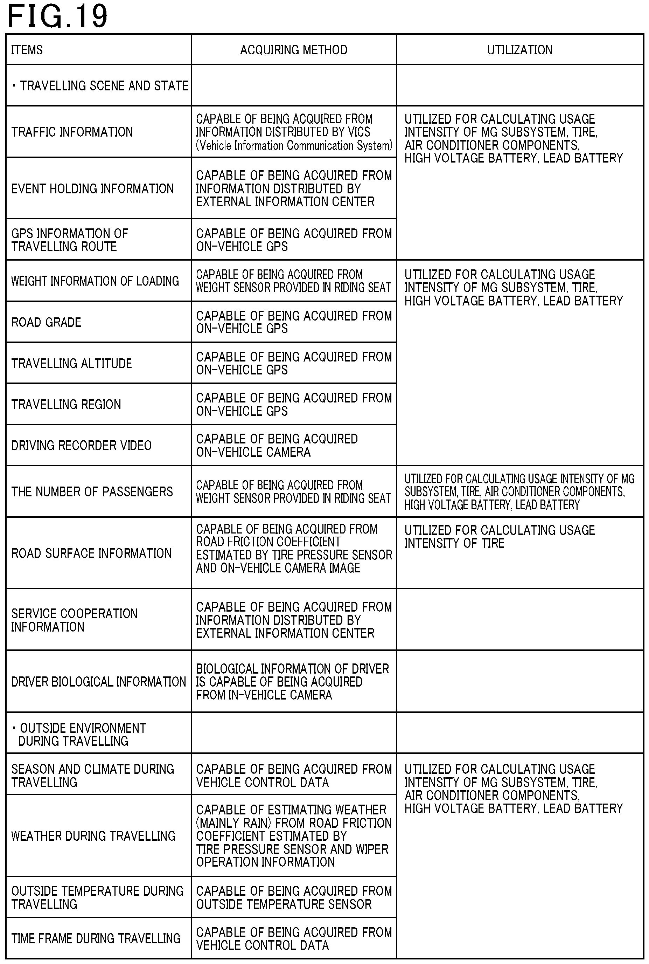

In the case where the intensity of use of respective on-vehicle products from the travelling data and the insurance fee is set, signals shown in Figs. 17 to 19 may be used.

The communication unit 81 may transmit information of the failure occurrence probability stored in the subscriber database 91 to a business operator. The business operator refers to a dealer which performs an inventory control of supplies or dispatching of wrecker. In this case, the communication unit 81 corresponds to business operator communication unit.

The control unit 50, the calculation units 80, 142 and the control method thereof disclosed in the present disclosure may be accomplished by one or more dedicated computers constituted of a processor and a memory programmed to execute one or more functions embodied by computer programs. The control unit 50, the calculation units 80, 142 and the control method thereof disclosed in the present disclosure may be accomplished by a dedicated computer provided by a processor configured of one or more dedicated hardware logic circuits. Further, the control unit 50, the calculation units 80, 142 and the control method thereof disclosed in the present disclosure may be accomplished by one or more dedicated computer where a processor and a memory programmed to execute one or more functions, and a processor configured of one or more hardware logic circuits are combined. Furthermore, the computer programs may be stored, as instruction codes executed by the computer, into a computer readable non-transitory tangible recording media. The dedicated hardware logic circuits and the hardware logic circuits may be accomplished by a digital circuit including a plurality of logic circuits or an analog circuit.

The present disclosure is not limited to the above-described specific examples. For these specific examples, a person ordinary skill in the art appropriately may appropriately modify the design thereof. These modified designs are included in the scope of the present disclosure as long as features of the present disclosure is provided therein. Further, respective elements included in the above-described specific examples, an arrangement, conditions and shapes thereof are not limited to the above-exemplified elements and may be appropriately modified. The respective elements in the above-described specific examples may be appropriately combined as long as no technical inconsistency is present.

**Claims**

1. A control system of a mobile body comprising:

   a data acquiring unit (51) that acquires data of a plurality of failure factors which may cause a failure on a mounted product mounted on a mobile body (20); and
   a failure occurrence probability calculation unit (53, 1421) that calculates, based on data of the plurality of failure factors, a failure occurrence probability of the mounted product corresponding to the data of the plurality of failure factors.

2. The control system of the mobile body according to claim 1,
   wherein
   the failure occurrence probability calculation unit calculates the failure occurrence probabilities of a respective plurality of components constituting the mounted product and calculates the failure occurrence probability of the mounted product based on the failure occurrence probabilities of the respective plurality of components.

3. The control system of the mobile body according to claim 2,
   wherein
   the failure occurrence probability calculation unit uses a failure occurrence probability of a component having the largest failure occurrence probability among respective failure occurrence probabilities of the plurality of components, to be a failure occurrence probability of the mounted product.

4. The control system of the mobile body according to claim 2,
   wherein
   the failure occurrence probability calculation unit calculates the failure occurrence probability of the mounted product based on respective failure occurrence probabilities of the plurality of components and respective availabilities of the plurality of components.

5. The control system of the mobile body according to claim 1,
   wherein
   the data acquiring unit acquires, as the failure factor, an environmental factor which influences the failure occurrence probability of the mounted product.

6. The control system of the mobile body according to any one of claims 1 to 5, further comprising:
   a failure determination unit (54, 1422) that determines that the failure occurrence probability is high when the failure occurrence probability of the mounted product is larger than or equal to a predetermined value.

7. The control system of the mobile body according to claim 1, further comprising:
   a fee calculation unit (82) that calculates a discount rate or an amount of discount based on a failure occurrence probability of the mounted product.

8. The control system of the mobile body according to claim 7, further comprising:

   a database (91) in which information of the failure occurrence probabilities of respective mounted products of a plurality of mobile bodies are stored; and
   the fee calculation unit calculates the discount rate or the amount of discount based on the information of the failure occurrence probabilities of mounted products stored in the database.

9. The control system of the mobile body according to claim 7 or 8, further comprising:
   a fee information notification unit (55) that notifies a driver of the mobile body of the discount rate or the amount of discount of the insurance fee and the insurance fee in accordance with the discount rate or the amount of discount after the discount.

10. The control system of the mobile body according to claim 7,
    wherein
    the fee calculation unit changes the discount rate or the amount of discount based on at least one of a type of the mounted product and a failure factor corresponding to the mounted product.

11. The control system of the mobile body according to claim 1, further comprising:
    a failure information notification unit (55) that gives a notification in accordance with a failure occurrence probability of the mounted product to the driver of the mobile body.

12. The control system of the mobile body according to claim 11,
    wherein
    the failure information notification unit notifies, when the driver of the mobile body performs an operation which increases the failure occurrence probability of the mounted product, the driver of that an operation to increase the failure occurrence probability of the mounted product is performed.

13. The control system of the mobile body according to claim 11 or 12, wherein

    the failure information notification unit displays a first screen with which a state of the mobile body is capable of being confirmed and a second screen with which a state of the mounted product is capable of being confirmed; and

the failure occurrence probability of the mounted product is displayed on the second screen for each of the plurality of failure factors.

14. The control system of the mobile body according to claim 1, further comprising:
a business operator communication unit (81) that transmits the failure occurrence probability of the mounted product to a business operator.

15. The control system of the mobile body according to claim 1,
wherein
the failure occurrence probability calculation unit is mounted on equipment (140) different from the mobile body.

16. A program causing a computer (50) to function as:

a data acquiring unit (51) that acquires data of a plurality of failure factors which may cause a failure on a mounted product mounted on a mobile body (20); and

a failure occurrence probability calculation unit (53, 1421) that calculates, based on data of the plurality of failure factors, a failure occurrence probability of the mounted product corresponding to the data of the plurality of failure factors.

# FIG.1

10

20

30

# FIG.2

20

27                    27

21        22        23              25            26

| BATTERY | INVERTER | MOTOR | TRANSMISSION | ENGINE |

GENERATOR — 24

# FIG.3

EP 4 365 815 A1

# FIG.4

VEHICLE STATE CONFIRMATION SCREEN

MOTOR ~106

BATTERY 101

ENGINE 105

TIRE 102

BRAKE 104

AIR CONDITIONER ~103

100 60

# FIG.5

110    60

ON-VEHICLE PRODUCT STATE CONFIRMATION SCREEN

```
  +        −
```

STAND-ALONE : 5%    ← Pf1

CYCLE : 10%    ← Pf2

# FIG.6

120    60

NOTIFICATION SCREEN

FAILURE PROBABILITY IS INCREASED
PERFORM BATTERY MAINTENANCE

→ CONFIRM STATUS

# FIG.7

```
        ┌─────────┐
        │  START  │
        └─────────┘
             │
    ┌────────▼─────────────────────────┐
    │  ACQUIRE VARIOUS INFORMATION      │───S10
    └───────────────┬───────────────────┘
                    │
    ┌───────────────▼───────────────────┐
    │         CALCULATE                  │───S11
    │  FAILURE OCCURRENCE PROBABILITY    │
    └───────────────┬───────────────────┘
                    │
    ┌───────────────▼───────────────────┐
    │         TRANSMIT                   │───S12
    │  FAILURE OCCURRENCE PROBABILITY    │
    └───────────────┬───────────────────┘
                    │               S13
                 ◇──▼──◇
              IS
           ON-VEHICLE
    NO   PRODUCT HAVING
   ◀────HIGHER FAILURE OCCURRENCE
           PROBABILITY
            PRESENT ?
                    │ YES
    ┌───────────────▼───────────────────┐
    │         NOTIFICATION               │───S14
    └───────────────┬───────────────────┘
                    │
            ┌───────▼───────┐
            │      END      │
            └───────────────┘
```

# FIG.8

```
         ┌─────────────┐
         │    START    │
         └──────┬──────┘
                │
                ▼
    ┌───────────────────────────┐
    │         CALCULATE         │────S20
    │ DISCOUNT RATE OF INSURANCE FEE │
    └──────────────┬────────────┘
                   │
                   ▼
    ┌───────────────────────────┐
    │         CALCULATE         │────S21
    │ INSURANCE FEE AFTER DISCOUNT │
    └──────────────┬────────────┘
                   │
                   ▼
    ┌───────────────────────────┐
    │         TRANSMIT          │────S22
    │ INSURANCE FEE AFTER DISCOUNT │
    └──────────────┬────────────┘
                   │
                   ▼
         ┌─────────────┐
         │     END     │
         └─────────────┘
```

# FIG.9

150    60

INSURANCE FEE CONFIRMATION SCREEN

VEHICLE STATE : FAVORABLE

DISCOUNT RATE :10% (MAXIMUM VALUE)

MONTHLY DISCOUNT AMOUNT : 1000 YEN (MAXIMUM VALUE)

# FIG.10

```
        ┌─────────┐
        │  START  │
        └────┬────┘
             │
             ▼
    ┌──────────────────────────┐
    │ ACQUIRE VARIOUS INFORMATION │──── S10
    └────────────┬─────────────┘
                 │
                 ▼
    ┌──────────────────────────┐
    │  CALCULATE USAGE INTENSITY OF │──── S30
    │      ON-VEHICLE PRODUCT       │
    └────────────┬─────────────┘
                 │
                 ▼
    ┌──────────────────────────┐
    │    SELECT USAGE DATA     │──── S31
    └────────────┬─────────────┘
                 │
                 ▼
    ┌──────────────────────────┐
    │        CALCULATE         │──── S11
    │ FAILURE OCCURRENCE PROBABILITY │
    └────────────┬─────────────┘
                 │
                 ▼
    ┌──────────────────────────┐
    │        TRANSMIT          │──── S12
    │ FAILURE OCCURRENCE PROBABILITY │
    └────────────┬─────────────┘
                 │
                 ▼
```

S13

IS
ON-VEHICLE
PRODUCT HAVING
HIGHER FAILURE OCCURRENCE
PROBABILITY
PRESENT ?

NO

YES

```
    ┌──────────────────────────┐
    │      NOTIFICATION        │──── S14
    └────────────┬─────────────┘
                 │
                 ▼
           ┌─────────┐
           │   END   │
           └─────────┘
```

# FIG.11

(A)
VEHICLE START
ON
OFF

(B)
VEHICLE STATE

(C)
USAGE INTENSITY
[%]

(D)
FAILURE
OCCURRENCE
PROBABILITY
[%]
$\alpha$

(E)
DISCOUNT RATE
[%]

(F)
INSURANCE FEE
AFTER DISCOUNT
[YEN]

t10          t11          TIME

# FIG.12

MARKET
STRESS
INTENSITY

FAILURE OCCURRENCE CURVE

$10^4$   $10^5$   $10^6$   $10^7$   $10^8$

THE NUMBER OF OCCURRENCE OF STRESS

# FIG.13

USAGE TIME

10 YEAR

FAILURE ESTIMATE LINE

4 YEAR

1 YEAR

6 MONTHS

100°C    80°C   60°C                    20°C

INVERSE NUMBER OF PRODUCT TEMPERATURE IN MARKET

# FIG.14

FIG.15

# FIG.16

(A)

23

```
MOTOR

  23(1)              23(2)                    23(m)

COMPONENT       COMPONENT                  COMPONENT
(SHAFT BEARING)  (MAGNET)        ...
```

(B)

21

```
BATTERY

  21(1)              21(2)                    21(n)

COMPONENT       COMPONENT                  COMPONENT
(ELECTRODE)     (COLLECTOR)     ...
```

# FIG.17

| ITEMS | ACQUIRING METHOD | UTILIZATION |
|---|---|---|
| ·DURABILITY | | |
| DURABILITY OF RESPECTIVE ON-VEHICLE PRODUCTS | AVAILABLE IN DESIGN/ MANUFACTURING STAGE | UTILIZED FOR CALCULATING HOW MUCH PRODUCT DURABILITY IS LOWERED, HOW MUCH FAILURE OCCURRENCE PROBABILITY IS INCREASED |
| AMOUNT OF STRESS WITH RESPECT TO USAGE INTENSITY | AVAILABLE IN DESIGN/ MANUFACTURING STAGE | |
| CONSUMPTION RATE OF EXPENDABLES | AVAILABLE IN DESIGN/ MANUFACTURING STAGE | |
| ·USAGE TIME OF RESPECTIVE ON-VEHICLE PRODUCTS | CAPABLE OF BEING ACQUIRED FROM VEHICLE CONTROL DATA | USAGE INTENSITY IS CALCULATED FROM USAGE FREQUENCY AND USAGE TIME OF RESPECTIVE PRODUCTS |
| ·CONTROL SIGNAL OF RESPECTIVE ON-VEHICLE PRODUCTS | | |
| MOTOR ROTATIONAL SPEED | CAPABLE OF BEING ACQUIRED FROM RESOLVER SENSOR | UTILIZED FOR CALCULATING POWER CONSUMPTION OF MOTOR BASED ON MOTOR ROTATIONAL SPEED AND MOTOR TORQUE |
| MOTOR TORQUE | CAPABLE OF BEING ACQUIRED FROM CURRENT COMMAND VALUE OF VEHICLE CONTROL DATA | |
| HIGH VOLTAGE BATTERY EFFICIENCY | CAPABLE OF BEING ACQUIRED FROM SPECIFICATION OF HIGH VOLTAGE BATTERY | USAGE INTENSITY IS CALCULATED BASED ON VARIOUS BATTERY INFORMATION (VOLTAGE, CURRENT, CHARGE TIME, NUMBER OF CHARGING) ACQUIRED FROM VEHICLE CONTROL DATA, DETERIORATION INFORMATION IS CALCULATED BASED ON HIGH VOLTAGE BATTERY SPECIFICATION, DURABILITY AND USAGE INTENSITY |
| HIGH VOLTAGE BATTERY OUTPUT VOLTAGE | CAPABLE OF BEING ACQUIRED FROM VEHICLE CONTROL DATA | |
| HIGH VOLTAGE BATTERY OUTPUT CURRENT | CAPABLE OF BEING ACQUIRED FROM VEHICLE CONTROL DATA | |
| NUMBER OF TIMES HIGH VOLTAGE BATTERY CHARGED | CAPABLE OF BEING ACQUIRED FROM VEHICLE CONTROL DATA | |
| 12V BATTERY EFFICIENCY | CAPABLE OF BEING ACQUIRED FROM SPECIFICATION OF LEAD BATTERY | USAGE INTENSITY IS CALCULATED BASED ON VARIOUS BATTERY INFORMATION (VOLTAGE, CURRENT, CHARGE TIME, NUMBER OF CHARGING) ACQUIRED FROM VEHICLE CONTROL DATA, DETERIORATION INFORMATION IS CALCULATED BASED ON LEAD BATTERY SPECIFICATION, DURABILITY AND USAGE INTENSITY |
| 12V BATTERY OUTPUT VOLTAGE | CAPABLE OF BEING ACQUIRED FROM VEHICLE CONTROL DATA | |
| 12V BATTERY OUTPUT CURRENT | CAPABLE OF BEING ACQUIRED FROM VEHICLE CONTROL DATA | |
| HEADLIGHT INFORMATION | CAPABLE OF BEING ACQUIRED FROM VEHICLE CONTROL DATA | UTILIZED FOR CALCULATING DEGREE OF DETERIORATION OF HEADLIGHT BASED ON HEADLIGHT LIGHTING INTENSITY AND LIGHTING TIME, AND UTILIZED FOR DETERMINING POWER USAGE OF WHOLE VEHICLE SYSTEM |
| WIPER OPERATION INFORMATION | CAPABLE OF BEING ACQUIRED FROM VEHICLE CONTROL DATA | UTILIZED FOR CALCULATING DEGREE OF DETERIORATION OF WIPER BASED ON WIPER USAGE INTENSITY AND USAGE TIME, AND UTILIZED FOR DETERMINING POWER USAGE OF WHOLE VEHICLE SYSTEM |
| AIR CONDITIONER SETTING TEMPERATURE | CAPABLE OF BEING ACQUIRED FROM VEHICLE CONTROL DATA | UTILIZED FOR CALCULATING DEGREE OF DETERIORATION OF AIR CONDITIONER COMPONENTS BASED ON OUTSIDE TEMPERATURE, AIR CONDITIONER SETTING TEMPERATURE, BLOWER ROTATIONAL SPEED AND DEFROSTER OPERATION INFORMATION AND UTILIZED FOR DETERMINING POWER USAGE OF WHOLE VEHICLE SYSTEM |
| BLOWER ROTATIONAL SPEED | CAPABLE OF BEING ACQUIRED FROM VEHICLE CONTROL DATA | |
| DEFROSTER OPERATION INFORMATION | CAPABLE OF BEING ACQUIRED FROM VEHICLE CONTROL DATA | |
| HEAT QUANTITY | PRODUCT HEAT QUANTITY IS CAPABLE OF BEING ACQUIRED IN ACCORDANCE WITH CURRENT AND VOLTAGE WHEN CONTROLLING RESPECTIVE ON-VEHICLE PRODUCT, AND HEAT QUANTITY DETERMINED FROM PRODUCT MATERIAL | UTILIZED FOR DEGREE OF DETERIORATION OF ON-VEHICLE PRODUCT |

# FIG.18

| ITEMS | ACQUIRING METHOD | UTILIZATION |
|---|---|---|
| MILLIMETER WAVE INFORMATION | CAPABLE OF BEING ACQUIRED FROM MILLIMETER WAVE SENSOR | UTILIZED FOR CALCULATING USAGE INTENSITY OF MILLIMETER WAVE SENSOR |
| ULTRASONIC WAVE SONAR INFORMATION | CAPABLE OF BEING ACQUIRED FROM ULTRASONIC SENSOR | UTILIZED FOR CALCULATING USAGE INTENSITY OF ULTRASONIC WAVE SENSOR |
| BUZZER INFORMATION | CAPABLE OF BEING ACQUIRED FROM VEHICLE CONTROL DATA | UTILIZED FOR CALCULATING USAGE INTENSITY OF BUZZER |
| COMPRESSOR OPERATION INFORMATION | CAPABLE OF BEING ACQUIRED FROM VEHICLE CONTROL DATA | UTILIZED FOR CALCULATING USAGE INTENSITY OF COMPRESSOR |
| AUDIO USAGE INFORMATION | CAPABLE OF BEING ACQUIRED FROM VEHICLE CONTROL DATA | UTILIZED FOR CALCULATING USAGE INTENSITY OF AUDIO |
| ELECTRICITY CONSUMPTION | ELECTRICITY CONSUMPTION IS ACQUIRED IN ACCORDANCE WITH CURRENT AND VOLTAGE WHEN CONTROLLING RESPECTIVE ON-VEHICLE PRODUCT, USAGE TIME AND POWER EFFICIENCY | UTILIZED FOR CALCULATING USAGE INTENSITY OF RESPECTIVE ON-VEHICLE PRODUCTS AND UTILIZED FOR CALCULATING HIGH VOLTAGE BATTERY AND LEAD BATTERY |
| COOLING WATER TEMPERATURE INFORMATION | CAPABLE OF BEING ACQUIRED FROM COOLING WATER TEMPERATURE SENSOR | UTILIZED FOR ESTIMATING TEMPERATURE OF MG SUB SYSTEM, CHARGER AND DDC, AND FOR CALCULATING USAGE INTENSITY |
| ECO-TRAVELLING SWITCH INFORMATION | CAPABLE OF BEING ACQUIRED FROM VEHICLE CONTROL DATA | UTILIZED FOR CALCULATING USAGE INTENSITY OF MG SUBSYSTEM AND HIGH VOLTAGE BATTERY |
| SPORTS DRIVING INFORMATION | CAPABLE OF BEING ACQUIRED FROM VEHICLE CONTROL DATA | UTILIZED FOR CALCULATING USAGE INTENSITY OF MG SUBSYSTEM AND HIGH VOLTAGE BATTERY |
| REGENERATIVE ENERGY INFORMATION | CALCULATE REGENERATIVE ENERGY FROM MOTOR ROTATIONAL SPEED AND MOTOR TORQUE | UTILIZED FOR CALCULATING USAGE INTENSITY OF MG SUBSYSTEM AND HIGH VOLTAGE BATTERY |
| WARNING LAMP OPERATION INFORMATION | CAPABLE OF BEING ACQUIRED FROM VEHICLE CONTROL DATA | UTILIZED FOR CALCULATING USAGE INTENSITY OF WARNING LAMP |
| WARNING SOUND OPERATION INFORMATION | CAPABLE OF BEING ACQUIRED FROM VEHICLE CONTROL DATA | UTILIZED FOR CALCULATING USAGE INTENSITY OF BUZZER |
| TIRE AIRE PRESSURE INFORMATION | CAPABLE OF BEING ACQUIRED FROM TIRE PRESSURE SENSOR | CALCULATION OF DEGREE OF DETERIORATION OF TIRE BASED ON DECREASE IN TIRE AIR PRESSURE |
| GEAR INFORMATION | CAPABLE OF BEING ACQUIRED FROM VEHICLE CONTROL DATA | UTILIZED FOR CORRECTING USAGE INTENSITY OF DRIVING SYSTEM WHEN BEING CALCULATED BASED ON GEAR INFORMATION |
| ・VEHICLE STATE | | |
| VEHICLE SPEED | CAPABLE OF BEING ACQUIRED FROM MG ROTATIONAL SPEED AND GEAR SETTING | UTILIZED FOR CALCULATING USAGE INTENSITY OF MG SUBSYSTEM |
| IN-VEHICLE TEMPERATURE | CAPABLE OF BEING ACQUIRED IN-VEHICLE TEMPERATURE SENSOR | UTILIZED FOR CALCULATING USAGE INTENSITY OF AIR CONDITIONER COMPONENTS |
| TOTAL TRAVELLING DISTANCE OF MOBILE BODY | CAPABLE OF BEING ACQUIRED FROM MG ROTATIONAL SPEED AND TIRE DIMENSION | UTILIZED FOR CALCULATING USAGE INTENSITY OF RESPECTIVE ON-VEHICLE PRODUCTS |
| ・DRIVER OPERATION VALUE | | |
| ACCELERATOR OPENING | CAPABLE OF BEING CALCULATED FROM ACCELERATOR OPENING | UTILIZED FOR CALCULATING USAGE INTENSITY OF MG SUBSYSTEM AND TIRE |
| BRAKE OPENING | CAPABLE OF BEING ACQUIRED FROM BRAKE STROKE SENSOR | UTILIZED FOR CALCULATING USAGE INTENSITY OF MG SUBSYSTEM AND TIRE |
| STEERING ANGLE | CAPABLE OF BEING ACQUIRED FROM STEERING ANGLE SENSOR | UTILIZED FOR CALCULATING USAGE INTENSITY OF MG SUBSYSTEM AND TIRE |
| OUTSIDE TEMPERATURE DURING TRAVELLING | CAPABLE OF BEING ACQUIRED FROM OUTSIDE TEMPERATURE SENSOR | UTILIZED FOR CALCULATING USAGE INTENSITY OF AIR CONDITIONER COMPONENTS |
| TIME FRAME DURING TRAVELLING | CAPABLE OF BEING ACQUIRED FROM VEHICLE CONTROL DATA | UTILIZED FOR CALCULATING USAGE INTENSITY OF MG SUBSYSTEM, TIRE, AIR CONDITIONER COMPONENTS, HIGH VOLTAGE BATTERY, LEAD BATTERY |

# FIG.19

| ITEMS | ACQUIRING METHOD | UTILIZATION |
|---|---|---|
| · TRAVELLING SCENE AND STATE | | |
| TRAFFIC INFORMATION | CAPABLE OF BEING ACQUIRED FROM INFORMATION DISTRIBUTED BY VICS (Vehicle Information Communication System) | UTILIZED FOR CALCULATING USAGE INTENSITY OF MG SUBSYSTEM, TIRE, AIR CONDITIONER COMPONENTS, HIGH VOLTAGE BATTERY, LEAD BATTERY |
| EVENT HOLDING INFORMATION | CAPABLE OF BEING ACQUIRED FROM INFORMATION DISTRIBUTED BY EXTERNAL INFORMATION CENTER | |
| GPS INFORMATION OF TRAVELLING ROUTE | CAPABLE OF BEING ACQUIRED FROM ON-VEHICLE GPS | |
| WEIGHT INFORMATION OF LOADING | CAPABLE OF BEING ACQUIRED FROM WEIGHT SENSOR PROVIDED IN RIDING SEAT | UTILIZED FOR CALCULATING USAGE INTENSITY OF MG SUBSYSTEM, TIRE, HIGH VOLTAGE BATTERY, LEAD BATTERY |
| ROAD GRADE | CAPABLE OF BEING ACQUIRED FROM ON-VEHICLE GPS | |
| TRAVELLING ALTITUDE | CAPABLE OF BEING ACQUIRED FROM ON-VEHICLE GPS | |
| TRAVELLING REGION | CAPABLE OF BEING ACQUIRED FROM ON-VEHICLE GPS | |
| DRIVING RECORDER VIDEO | CAPABLE OF BEING ACQUIRED ON-VEHICLE CAMERA | |
| THE NUMBER OF PASSENGERS | CAPABLE OF BEING ACQUIRED FROM WEIGHT SENSOR PROVIDED IN RIDING SEAT | UTILIZED FOR CALCULATING USAGE INTENSITY OF MG SUBSYSTEM, TIRE, AIR CONDITIONER COMPONENTS, HIGH VOLTAGE BATTERY, LEAD BATTERY |
| ROAD SURFACE INFORMATION | CAPABLE OF BEING ACQUIRED FROM ROAD FRICTION COEFFICIENT ESTIMATED BY TIRE PRESSURE SENSOR AND ON-VEHICLE CAMERA IMAGE | UTILIZED FOR CALCULATING USAGE INTENSITY OF TIRE |
| SERVICE COOPERATION INFORMATION | CAPABLE OF BEING ACQUIRED FROM INFORMATION DISTRIBUTED BY EXTERNAL INFORMATION CENTER | |
| DRIVER BIOLOGICAL INFORMATION | BIOLOGICAL INFORMATION OF DRIVER IS CAPABLE OF BEING ACQUIRED FROM IN-VEHICLE CAMERA | |
| · OUTSIDE ENVIRONMENT DURING TRAVELLING | | |
| SEASON AND CLIMATE DURING TRAVELLING | CAPABLE OF BEING ACQUIRED FROM VEHICLE CONTROL DATA | UTILIZED FOR CALCULATING USAGE INTENSITY OF MG SUBSYSTEM, TIRE, AIR CONDITIONER COMPONENTS, HIGH VOLTAGE BATTERY, LEAD BATTERY |
| WEATHER DURING TRAVELLING | CAPABLE OF ESTIMATING WEATHER (MAINLY RAIN) FROM ROAD FRICTION COEFFICIENT ESTIMATED BY TIRE PRESSURE SENSOR AND WIPER OPERATION INFORMATION | |
| OUTSIDE TEMPERATURE DURING TRAVELLING | CAPABLE OF BEING ACQUIRED FROM OUTSIDE TEMPERATURE SENSOR | |
| TIME FRAME DURING TRAVELLING | CAPABLE OF BEING ACQUIRED FROM VEHICLE CONTROL DATA | |

## INTERNATIONAL SEARCH REPORT

| International application No. |
|---|
| **PCT/JP2022/022789** |

**A. CLASSIFICATION OF SUBJECT MATTER**

*G06Q 50/10*(2012.01)i; *B60L 3/00*(2019.01)i; *B60L 58/10*(2019.01)i; *B60R 16/02*(2006.01)i; *G01M 17/007*(2006.01)i; *G06Q 10/00*(2012.01)i; *G06Q 30/02*(2012.01)i; *G06Q 40/08*(2012.01)i; *G06Q 50/04*(2012.01)i; *G16Y 10/40*(2020.01)i; *G16Y 20/20*(2020.01)i; *G16Y 40/20*(2020.01)i

FI: G06Q50/10; B60L3/00 N; B60L58/10; B60R16/02 650J; G01M17/007 H; G06Q10/00 300; G06Q30/02 320; G06Q40/08; G06Q50/04; G16Y10/40; G16Y20/20; G16Y40/20

According to International Patent Classification (IPC) or to both national classification and IPC

**B. FIELDS SEARCHED**

Minimum documentation searched (classification system followed by classification symbols)

G06Q10/00-99/00; B60L3/00; B60L58/10; B60R16/02; G01M17/007; G16Y10/40; G16Y20/20; G16Y40/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2012/0330501 A1 (GM GLOBAL TECHNOLOGY OPERATIONS LLC) 27 December 2012 (2012-12-27) paragraphs [0002], [0004], [0040], [0041], [0043], [0057], [0071]-[0073], fig. 1-3 | 1-2, 16 |
| Y | paragraphs [0002], [0004], [0040], [0041], [0043], [0057], [[0070]-[0073], [0076], fig. 1-3 | 3, 5-6, 11-15 |
| A | paragraphs [0002], [0004], [0040], [0041], [0043], [0057], [[0070]-[0073], [0076], fig. 1-3 | 4, 7-10 |
| Y | SHU, Xiong, A Detailed Reliability Study of the Motor System in Pure Electric Vans by the Approach of Fault Tree Analysis. IEEE Access [online], vol. 8, IEEE, 09 January 2020, pp. 5295-5307, [retrieved on 16 August 2022], Internet: <URL: https://ieeexplore.ieee.org/document/8946531>, DOI: 10.1109/ACCESS.2019.2963197 p. 5299, left column, line 9 to p. 5301, right column, line 2, p. 5303, right column, lines 3-13, formula (12), tables 3-5, 9 | 3, 5-6 |
| Y | KR 10-1683242 B1 (CAR-IS CO., LTD.) 07 December 2016 (2016-12-07) claim 1, paragraphs [0020]-[0025], [0052]-[0062], [0084], [0100], [0108], fig. 1 | 11-15 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 August 2022** | **30 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2022/022789** |

**C.    DOCUMENTS CONSIDERED TO BE RELEVANT**

| Category* | Citation of document, with indication, where appropriate, of the relevant passages | Relevant to claim No. |
|---|---|---|
| Y | JP 2012-247308 A (DENSO CORP.) 13 December 2012 (2012-12-13)<br>    paragraphs [0008]-[0010], [0029]-[0038], [0044], [0053]-[0060], fig. 1, 2 | 11-15 |
| A | JP 2017-199229 A (HITACHI AUTOMOTIVE SYSTEMS LTD.) 02 November 2017 (2017-11-02)<br>    entire text, all drawings | 1-16 |
| A | JP 2013-190909 A (KABUSHIKI KAISHA TOSHIBA) 26 September 2013 (2013-09-26)<br>    entire text, all drawings | 1-16 |
| A | EP 3260940 A1 (SIEMENS AG) 27 December 2017 (2017-12-27)<br>    entire text, all drawings | 1-16 |
| A | CN 112069649 A (WUHAN TECHNICAL COLLEGE OF COMMUNICATIONS) 11 December 2020 (2020-12-11)<br>    entire text, all drawings | 1-16 |
| A | JP 2015-049775 A (INTERNATIONAL BUSINESS MACHINES CORP.) 16 March 2015 (2015-03-16)<br>    entire text, all drawings | 1-16 |
| A | JP 6877668 B1 (MITSUBISHI ELECTRIC CORP.) 26 May 2021 (2021-05-26)<br>    entire text, all drawings | 1-16 |
| A | US 2005/0114237 A1 (URSO, John C.) 26 May 2005 (2005-05-26)<br>    entire text, all drawings | 1-16 |

INTERNATIONAL SEARCH REPORT
Information on patent family members

International application No.

**PCT/JP2022/022789**

| Patent document cited in search report | | | Publication date (day/month/year) | Patent family member(s) | | Publication date (day/month/year) |
|---|---|---|---|---|---|---|
| US | 2012/0330501 | A1 | 27 December 2012 | (Family: none) | | |
| KR | 10-1683242 | B1 | 07 December 2016 | (Family: none) | | |
| JP | 2012-247308 | A | 13 December 2012 | (Family: none) | | |
| JP | 2017-199229 | A | 02 November 2017 | US 2019/0108160 entire text, all drawings CN 109074299 | A1 A | |
| JP | 2013-190909 | A | 26 September 2013 | (Family: none) | | |
| EP | 3260940 | A1 | 27 December 2017 | US 2017/0364063 entire text, all drawings CN 107527130 | A1 A | |
| CN | 112069649 | A | 11 December 2020 | (Family: none) | | |
| JP | 2015-049775 | A | 16 March 2015 | US 2015/0067400 entire text, all drawings | A1 | |
| JP | 6877668 | B1 | 26 May 2021 | (Family: none) | | |
| US | 2005/0114237 | A1 | 26 May 2005 | (Family: none) | | |

Form PCT/ISA/210 (patent family annex) (January 2015)

**EP 4 365 815 A1**

## REFERENCES CITED IN THE DESCRIPTION

**Patent documents cited in the description**

- JP 2021106713 A

- JP 2022057103 A